# EUROPÄISCHE PATENTANMELDUNG

(11) **EP 3 115 506 A1**
(43) Veröffentlichungstag der Anmeldung: **11.01.2017**
(21) Anmeldenummer: 15002032.9
(22) Anmeldetag: 07.07.2015
(51) Int. Cl.: E01C 1/00, D06N 5/00, C08L 91/06, C08L 95/00

(54) **ZUCKERROHRWACHS BESTEHEND AUS LANGKETTIGEN FETTSÄUREN, LANGKETTIGEN ALKOHOLEN UND LANGKETTIGEN ALIPHATISCHEN KOHLENWASSERSTOFFEN UND DEREN MISCHUNGEN MIT ANDEREN WACHSEN ZUR BITUMENMODIFIKATION, HERGESTELLT AUS DEM NACHWACHSENDEN BIOROHSTOFF (PRESSMUS, BAGASSE), DER NACH DER ZUCKERHERSTELLUNG AUS ZUCKERROHR GEWONNEN WIRD**

(71) Anmelder: Wachs-Chemie Elsteraue e.K., 80638 München (DE)
(72) Erfinder: Hufschmid, Diana, 80638 München (DE)

(57) **Zusammenfassung**

Die Erfindung betrifft ein Zuckerrohrwachs mit einer Säurezahl kleiner 100 und einer Viskosität gemessen bei 160°C kleiner 100 mPas das zur Modifizierung von Bitumen für den Straßenbau sowie für die Modifizierung von Bitumen für Dachbahnen verwendet werden und dort die Verarbeitungstemperaturen erniedrigen und die Haltbarkeit und Langlebigkeit deutlich erhöhen.

## Beschreibung

Gegenstand der Erfindung ist die Verwendung von Zuckerrohrwachs und deren Mischungen mit anderen Wachsen, hergestellt aus dem nachwachsenden Biorohstoff (Pressmud, Bagasse) der nach der Zuckerproduktion aus Zuckerrohr hergestellt wird, um damit Bitumen so zu modifizieren, dass die daraus hergestellten Asphalte oder Dachbahnen bei niedrigeren Temperaturen verlegt bzw. verarbeitet werden können, bei gleichzeitig verlängerten Haltbarkeiten, besserer Wasserabweisung und geringeren Abnutzungserscheinungen wie z. B. Spurrillenbildung auf Straßen und Autobahnen.

### Stand der Technik

Bekanntlich handelt es sich bei Bitumen um aus Erdölen gewonnene schwerflüchtige, dunkle fast schwarze Gemische verschiedener organischer Substanzen. Je nach Zusammensetzung liegt das Bitumen als hartes oder zähelastisches Produkt vor, dessen viskoelastisches Verhalten sich mit der Temperatur ändert. Bitumen findet man in den verschiedenen Anwendungen. Zum Beispiel in Anstrichstoffen, im Bautenschutz, Dachbahnen, hauptsächlich aber als Straßenbaubitumen zur Herstellung von Asphalt für den Bau und die Erhaltung von Verkehrsflächen, Straßen und Autobahnen. Der Asphalt besteht aus Mineralstoffen, Bitumen und gegebenenfalls Additiven. Im Asphalt erfüllt das Bitumen die Funktion des Bindemittels zwischen einzelnen Komponenten, insbesondere den als Hauptbestandteil vorhandenen Mineralstoffen.

Es ist bereits seit längerem bekannt, dass das Bitumen, gerade bei der Anwendung für den Straßenbau, mit verschiedenen Zusätzen modifiziert wird, um bestimmte Eigenschaften einzustellen. Es können natürlich auch mehrere Zusätze zugegeben werden. Hier kann es sich um thermoplastische Elastomere oder thermoelastische Kunststoffe als Zuschlagstoffe handeln. Man spricht dann von polymermodifiziertem Bitumen.

Allerdings geht durch den Zusatz von SBS (Styrol-Butadien-Styrol-Blockcopolymer) zum Bitumen ein Anstieg der Viskosität des Bitumenbindemittels einher. Hierdurch wird entweder die Verarbeitung erschwert - ein zäheres Material benötigt höhere Einarbeitungskosten, oder die Verarbeitung muss von vornherein bei höheren Temperaturen durchgeführt werden. Dementsprechend sind derartig modifizierte Bindemittel für eine Asphaltherstellung und Asphaltverarbeitung bei abgesenkter Temperatur, wie sie aus Gründen der Immissionsvermeidung, des Umweltschutzes sowie des Arbeitsschutzes angestrebt wird, nicht geeignet. Versucht man diesen Nachteil durch ein weiteres Additiv den Zusatz z. B. von einem sogenannter Asphaltverflüssiger, die alle über eine negative Energiebilanz verfügen, wie Fischer-Tropsch Wachse, Fischer Tropsch - Paraffine, Amidwachse / EBS oder Montanwachse auszugleichen, so müssen diese in beträchtlichen Mengen, beispielsweise von 3 Masse-%, bezogen auf das Bitumen, zugesetzt werden. Durch die damit verbundenen zusätzlichen Kosten wird dann allerdings die Wirtschaftlichkeit durch die Additivierung in Frage gestellt.

Weiterhin ist es auch bekannt, dass Gemische aus Straßenbaubitumen und EBS als Bindemittel für Asphaltmischungen für den Verkehrsflächenbau verwendet werden können. Bei EBS handelt es sich um Ethylen-bis-stearoylamid, das auch als Bis-stearoyl-ethylendiamin bezeichnet wird. Es handelt sich hierbei um ein Fettsäurederivat mit einem Tropfpunkt von ca. 145 °C, wie es zum Beispiel bei der Firma DEUREX AG, Deutschland unter dem Namen A 20 erhältlich ist. EBS / Amidwachs bewirkt im Bitumen einen Anstieg des Erweichungspunktes sowie einen Abfall der Nadelpenetration, wodurch die Standfestigkeit der Asphaltmassen erhöht wird. Außerdem wird durch EBS / Amidwachs eine Verringerung der Viskosität des Bindemittels erreicht und dadurch eine Verbesserung der Verarbeitbarkeit des Asphaltmischguts bewirkt.

Nach dem Stand der Technik beträgt die erforderliche Zusatzmenge an EBS / Amidwachs zum Bitumen 2 - 3 % auf das Bitumen bezogen. Dabei wird ausdrücklich hervorgehoben, daß Anwendungsmengen unter 3 Masse-% im Bitumen eine zu geringe Eigenschaftsveränderung des Bitumens bewirken (siehe Firmenschrift der Clariant GmbH zu deren Produkt Licomont BS 100).
https://www.clariant.com/en/Solutions/Products/2014/03/18/16/33/Licomont-BS-100-powder
Was auch in diversen Zeitschriften veröffentlicht wurde.
http://umweltdienstleister.de/2010/02/04/langzeitverhalten-von-asphalt-verbessert
Und auch in der EU Patentschrift 04004109.7 dargelegt wird.

Aus der Schilderung des Standes der Technik konnte gezeigt werden, dass Zusätze zu Bitumen bekannt sind, die wiederum nur ganz bestimmte Eigenschaften der Bitumen verändern. Nach dem derzeitigen Kenntnisstand müssen diese Zusatzstoffe in bestimmten Mengen zugegeben werden, um die gewünschte Eigenschaftsveränderung hervorzurufen. Dies ist auch verschiedenen Patentschriften zu entnehmen, die hier allerdings nur exemplarisch aufgelistet werden.

Es ist bekannt, dass es Bitumenmodifizierungsmittel auf Amidwachsbasis, wie es in der Druckschrift DE 10224847 A1 dargelegt wird, gibt, die unter anderem hauptsächlich für den Straßenbau verwendet werden.

Es ist bekannt, dass es modifiziertes Bitumen auf SBS Basis (Styrol-Butadien-Styrol-Blockcopolymer) und EBS Basis (Ethylen-bis-stearoylamid), wie in der Druckschrift DE 10309494 A1 dargelegt wird, gibt, die unter anderem für den Straßenbau verwendet werden.

Es ist bekannt, dass es Bitumenmodifizierungsmittel auf Paraffinbasis, wie in der Druckschrift WO 2007054503 A1 dargelegt wird, gibt, die unter anderem für Straßenbau verwendet werden, obwohl auch bekannt ist, dass Paraffine in der Endformulierung schmieren.

In einem 2014 erteiltem Patent WO 2002016499 A1 wird beschrieben wie ein FT-Paraffin die Widerstandfähigkeit des Bitumens gegen Benzine steigert und so die Haltbarkeit einer asphaltierten Straße erhöht.

### Aufgabenstellung

Diese Bitumenmodifizierungsmittel verbessern die Verarbeitbarkeit und die Standfestigkeit der Straßenbeläge. Als Bitumenmodifizierungsmittel werden bisher ausschließlich synthetische Produkte, oder die sogenannten halbsynthetischen Montanwachse genommen.

Uns stellte sich nun die Aufgabe mit der Zugabe eines Wachses als Additiv - eines natürlichen, nachwachsenden und CO2 neutralen Zuckerrohrwachses zum Bitumen, dieses so zu additivieren, dass keine Nachteile entstehen. Es soll dabei insbesondere ein modifiziertes Bitumen zur Asphaltherstellung erhalten werden, das einen Asphalt hoher Standfestigkeit bei gleichzeitig leichter Verarbeitbarkeit also niedriger Viskosität bereitstellt. Das so modifizierte Bitumen soll einen Asphalt ergeben, der nach Zugbeanspruchung mit hoher Dehnung eine gute elastische Rückstellung besitzen und mit wirtschaftlich gut vertretbarem Aufwand hergestellt werden kann.

Bisher fehlt es an einem natürlichen, nachhaltigen, CO2 neutralen und nachwachsenden Rohstoff als Additiv für die Bitumenmodifizierung.

### Lösung

Überraschenderweise haben wir herausgefunden, dass ein Zuckerrohrwachs (ZRW) die gesuchten Eigenschaften, wie Erniedrigung der Verarbeitungstemperatur, Erniedrigung der Viskosität und Erhöhung der Standfestigkeit in hervorragender Weise vereint. Ebenso überraschend haben wir herausgefunden, dass auch Mischungen mit PE - Wachsen, PP - Wachsen, Paraffinen, FT-Paraffinen und natürlichen Wachsen mit dem Zuckerrohrwachs diese positiven Eigenschaften, wie die Erniedrigung der Verarbeitungstemperatur, Erniedrigung der Viskosität und Erhöhung der Standfestigkeit in hervorragender Weise vereint. Das ZRW ist mit allen anderen Wachsen in jeder Konzentration mischbar.

Das ZRW ist ein Wachs nach der Definition für Wachse der Deutschen Gesellschaft für Fettwissenschaft von 1974.

### Definition:

Wachs ist eine technologische Sammelbezeichnung für eine Reihe natürlicher und künstlich gewonnener Stoffe, die folgende Eigenschaften aufweisen:
- bei 20 °C knetbar,
- fest bis brüchig hart,
- grob- bis feinkristallin,
- durchscheinend bis opak, jedoch nicht glasartig,
- über 40 °C ohne Zersetzung schmelzend,
- schon wenig oberhalb des Schmelzpunktes verhältnismäßig niedrigviskos,
- stark temperaturabhängige Konsistenz und Löslichkeit,
- unter leichtem Druck polierbar.

Sind in Grenzfällen bei einem Stoff mehr als eine dieser Eigenschaften nicht erfüllt, ist er kein Wachs im Sinne dieser Definition.

Dieses ZRW mit den einzigartigen Eigenschaften für die Bitumenmodifizierung hat eine Kohlenstoffkettenlänge von C16 - C 38 Kohlenstoff- Wiederholungseinheiten, die teilweise eine Säureendgruppe, oder eine Alkoholendgruppe enthalten.

Das in Anspruch 1 beanspruchte ZRW hat folgende physikalischen- und chemischen Eigenschaften und wird aus dem Pressmud / Bagasse, also dem anfallenden Restprodukt der Zuckerproduktion hergestellt.
Farbe: Hellgelb - schwarz
Tropfpunkt: 70 -110 °C
Säurezahl: kleiner 100
Viskosität gemessen bei 160°C: kleiner 100 mPas
Dichte: kleiner 1
Jodzahl: kleiner 40
Wasserlöslichkeit: Nein
Löslich in aliphatischen Lösemitteln in der Wärme.

Die Zuckerrohrwachdosierung für die Bitumenmodifizierung beträgt 0,5 - 10 %.

Die Eigenschaften des erfindungsgemäß mit dem Zuckerrohrwachs hergestellten modifizierten Bitumen unterscheiden sich deutlich von unmodifiziertem Bitumen vergleichbarer Härte siehe Tabelle 1. So liegt der Erweichungspunkt Ring und Kugel (gemessen nach DIN EN 1427) wesentlich höher und beträgt zwischen 70 °C und 110 °C. Bevorzugte Werte sind hier zwischen 95 °C und 102 °C. Auch der Brechpunkt nach Fraaß ist wie die Tabelle 1 zeigt deutlich nach unten verschoben und gibt somit weniger Anlass zur Rissbildung bei Kälteeinflüssen. Auch zeigt es ein ausgezeichnetes elastisches Rückstellvermögen. Bezüglich der verbesserten Eigenschaften des erfindungsgemäßen Bitumens wird auf die später noch folgenden Beispiele verwiesen.

### Verwendung des neuen ZRW

Das ZRW ist bei Temperaturen über 85 °C in allen Bitumenarten vollständig löslich. Dabei erreicht man eine deutliche Reduzierung der Viskosität des Bitumens. Die mit dem ZRW modifizierten Bitumen, oder mit deren Mischungen mit anderen Wachsen, können mit deutlich niedrigeren Temperaturen verarbeitet werden.

Temperaturreduzierung bei der Verarbeitung von 20 bis 30 °C sind bei einer Dosierung des ZRW von 1 % bereits erreichbar. Höhere Temperaturreduzierungen bei der Verarbeitung bis zu 70°C sind durch Prozessoptimierungen und einer Dosierung des ZRW von 1- 3 % erreichbar, was zu einer erheblichen Energieeinsparung und damit zur CO2 Reduzierung führt.

Während der Abkühlphase kristallisiert das ZRW und bilden eine Gitterstruktur im Bitumen aus, die zu einer eindrucksvollen Stabilitätserhöhung der Asphaltschicht führt, besonders deutlich ist der Effekt bei Gussasphalten zu beobachten.

**Tabelle 1**

| Temperaturstabilität bei 180 °C nach der Tubentestmethode | | | | | | | | | | | | |
|---|---|---|---|---|---|---|---|---|---|---|---|---|
| Bitumen B 50/70 Allein | | | | Bitumen B 50/70 2 % ZRW | | | Bitumen 50/70 Amidwachs | | | Bitumen 50/70 3% FT Paraffin | | |
| | 1 | 2 | 3 | 1 | 2 | 3 | 1 | 2 | 3 | 1 | 2 | 3 |
| ERK | 55 | 52 | 64 | 95 | 100 | 102 | 95 | 95 | 95 | 82 | 83 | 85 |
| Npe | 53 | 55 | 62 | 35 | 35 | 25 | 39 | 35 | 30 | 43 | 43 | 32 |
| Visk | 80 | 80 | 130 | 70 | 72 | 110 | 73 | 75 | 115 | 73 | 77 | 120 |
| 180°C | | | | | | | | | | | | |
| Fraaß | -9 | -9 | -6 | -14 | -14 | -12 | -12 | -12 | -10 | -12 | -12 | -11 |

| | | | | | | | | | | | | |
|---|---|---|---|---|---|---|---|---|---|---|---|---|
| 1 = Messung sofort; 2 = Messung nach 24 Stunden; 3 = Messung nach 21 Tagen Messdaten: Tubenmittelwerte aus den Messdaten Tube oben; Tube Mitte und Tube unten | | | | | | | | | | | | |

### Beispiele:

### 1. 250 °C Temperaturbereich der Gussasphalt-Herstellung und Verarbeitung

Die niedrige Verarbeitungsviskosität und der niedrige Schmelzpunkt des mit dem ZRW modifizierten Bitumens ermöglicht eine erhebliche Absenkung der Verarbeitungstemperaturen um 100 °C von der Gesteinstemperatur während der Mischgutherstellung.
Die mit dem ZRW Bitumenadditiv ausgerüsteten Gussasphalte können bei unter 200 °C eingebaut werden, die Gussasphalt-Estriche schon bei unter 220°C.

### 2. 180°C Temperaturbereich der Walzasphalt-Herstellung (160 - 180°C)

Durch die niedrige Verarbeitungsviskosität und durch den niedrigen Schmelzpunkt und die hohe Klebkraft des mit dem ZRW modifizierten Bitumens werden die Mineralstoffe im Walzasphalt so gut fest gehalten und umhüllt, dass erst nach deutlich vermehrten Überrollungen kleine bis kleinste Teile herausgebrochen werden. Dies führt zu einer deutlich höheren Lebensdauer.

### 3. 115 °C Temperaturbereich der Verlegung und Verdichtung (110 - 150 °C)

Im Temperaturbereich von 115 °C ist die Viskosität der mit dem ZRW ausgerüsteten Bitumen im Vergleich zu nicht modifizierten Bitumen ausgesprochen hoch, da bei diesen Temperaturen das ZRW noch sehr dünnflüssig.

Es wird nochmals ausdrücklich festgestellt, dass die erfindungsgemäße Modifizierung des Bitumens mit dem ZRW, oder mit deren Abmischungen mit PE-, PP-, anderen natürlichen Wachsen aber auch mit Paraffinen und FT - Paraffinen zu überraschenden Eigenschaften sowohl im modifizierten Bitumen selbst als auch in dem damit hergestellten Asphalt führt. Das mit ZRW oder deren Mischungen mit anderen Wachsen modifizierte Bitumen ist besonders geeignet für die Herstellung von Asphalten mit sehr hoher Standfestigkeit. Es besitzt die gewünschte elastische Rückstellung und bringt diese in den Asphalt ein. Das Bindemittel ist in besonderer Weise für eine Asphaltbauweise mit abgesenkter Temperatur zu verwenden. Die aus dem ZRW modifizierten Bitumen hergestellte Asphalte sind in hohem Maße gebrauchstauglich. Ihr Widerstand gegen Verformungen durch wiederholte schwere Belastungen rechtfertigt ihre Einstufung als hochstandfeste Asphaltmassen.

Insbesondere aufgrund der Ergebnisse der Nadelpenetration, der Viskosität und des Brechpunktes nach Fraaß - Tabelle 1- ist das mit ZRW modifizierte Bitumen als Bindemittel besonders geeignet für Asphalte mit hoher Standfestigkeit einzustufen. Darüber hinaus besitzt es die gewünschte elastische Rückstellung.

Um die Verformungsresistenz von Asphalt nachzuweisen, der mit dem ZRW modifizierten Bitumen als Bindemittel festgestellt wurde, wurden Probekörper aus einem Asphaltbindermischgut 0/16 S nach ZTV Asphalt - StB 01 im Spurbildungsversuch (Technische Prüfvorschriften für Asphalt im Straßenbau TP A-StB, Teil: Spurbildungsversuch - Bestimmung der Spurrinnentiefe im Wasserbad) geprüft.

An zwei Probekörpern aus diesem Mischgut wurde der Spurbildungsversuch im Wasserbad bei 50 °C durchgeführt.

Nach 20.000 Überrollungen betrug die mittlere Spurrinnentiefe 1,3 mm (Einzelwerte 1,28 mm bzw. 1,42 mm).
Somit ist das Mischgut als hochstandfest einzustufen.

## Patentansprüche

1. Beansprucht wird ein Zuckerrohrwachs, hergestellt aus dem Wertstoff (Pressmud, Bagasse) der Zuckerherstellung aus Zuckerrohr, der nach der Zuckerherstellung als Filterkuchen abgetrennt und zur Gewinnung von Zuckerrohrwachs aufgearbeitet wird, zur Modifizierung von Bitumen, das **dadurch gekennzeichnet ist, dass** die damit hergestellten Asphalte für Asphaltierungen für Verkehrsflächen, den Straßen- und Autobahnbau, eine längere Standfestigkeit und damit eine längere Lebensdauer haben, sowie bei niedrigeren Temperaturen verarbeitet werden können.

2. Beansprucht wird ein Zuckerrohrwachs nach Anspruch 1, **dadurch gekennzeichnet, dass** das Zuckerrohrwachs mit PE Wachsen, mit PP Wachsen, mit Paraffinen, mit FT Paraffinen, mit Carnaubawachs, mit Candillilawachs, mit Bienenwachs, mit Reiswachs in allen Konzentrationen abgemischt werden kann und die damit hergestellten Asphalte für Asphaltierungen für den Straßen- und Autobahnbau eine längere Standfestigkeit und damit eine längere Lebensdauer haben, sowie bei niedrigeren Temperaturen verarbeitet werden können.

3. Beansprucht wird ein Zuckerrohrwachs nach Anspruch 1 und 2, **dadurch gekennzeichnet, dass** das verwendete Wachs als Bitumenmodifizierungsmittel für die Herstellung von Bitumenbahnen, Abdichtungsbahnen und Dachbahnen verwendet wird.

4. Beansprucht wird ein Zuckerrohrwachs nach Anspruch 1 bis 3, **dadurch gekennzeichnet, dass** das verwendete Wachs als Bitumenmodifizierungsmittel für die Herstellung von Anstrichstoffen für den Bautenschutz verwendet wird.

5. Beansprucht wird ein Zuckerrohrwachs nach Anspruch 1 bis 4, **dadurch gekennzeichnet, dass** das verwendete Wachs als Bitumenmodifizierungsmittel für die Herstellung von Abdichtungsmaterialien verwendet wird.

6. Beansprucht wird ein Zuckerrohrwachs nach Anspruch 1 bis 5, **dadurch gekennzeichnet, dass** das verwendete Wachs als Bitumenmodifizierungsmittel für die Herstellung von lösemittelhaltigen Bitumen-Spachtelmassen zum Abdichten auf Bitumenbahnen und Schließen von Durchbrüchen verwendet wird.

7. Beansprucht wird ein Zuckerrohrwachs nach Anspruch 1 bis 6 **dadurch gekennzeichnet, dass** das verwendete Wachs als Bitumenmodifizierungsmittel für die Herstellung von 2-komponentigen kunststoffmodifizierten Bitumen-Dickbeschichtungen nach DIN 18 195-2 verwendet wird, sowie mit Polystyrol gefüllte Bitumen und zur Herstellung einer flexiblen, rissüberbrückenden Abdichtung von erdberührten Bauwerken und Bauteilen gegen Bodenfeuchte und nicht stauendes Sickerwasser nach DIN 18 195-4 hergestellt Bitumen verwendet wird, sowie gegen nicht drückendes Wasser auf Deckenflächen nach DIN 18 195-5 und mit Gewebeeinlage gegen aufstauendes Sickerwasser nach DIN 18 195-6 hergestellte Bitumen verwendet wird.
